(19) Europäisches Patentamt
European Patent Office
Office européen des brevets

(11) **EP 1 221 773 B1**

(12) **FASCICULE DE BREVET EUROPEEN**

(45) Date de publication et mention
de la délivrance du brevet:
**24.03.2004 Bulletin 2004/13**

(51) Int Cl.7: **H04B 1/707**, H04L 25/03

(21) Numéro de dépôt: **01403265.0**

(22) Date de dépôt: **13.12.2001**

(54) **Méthode et dispositif de détection multi-utilisateur en mode DS-CDMA**

Verfahren und Gerät zur Mehrbenutzerdetektion in DS-CDMA Modus

Method and apparatus for multi-user detection in DS-CDMA mode

(84) Etats contractants désignés:
**AT BE CH CY DE DK ES FI FR GB GR IE IT LI LU MC NL PT SE TR**

(30) Priorité: **20.12.2000 FR 0017071**

(43) Date de publication de la demande:
**10.07.2002 Bulletin 2002/28**

(73) Titulaire: **Mitsubishi Electric Information Technology Centre Europe B.V.**
**1119 NS Schiphol Rijk (NL)**

(72) Inventeur: **Brunel, Loic, Mitsubishi Electricite 35700 Rennes (FR)**

(74) Mandataire: **Maillet, Alain**
**Cabinet le Guen & Maillet,**
**5, Place Newquay,**
**B.P. 70250**
**35802 Dinard Cedex (FR)**

(56) Documents cités:
**DE-C- 19 630 391**

- **FAWER U ET AL: "MULTIUSER RECEPTION FOR TRELLIS-BASED CODE DIVISION MULTIPLE ACCESSCOMMUNICATIONS" PROCEEDINGS OF THE MILITARY COMMUNICATIONS CONFERENCE (MILCOM). LONG BRANCH, NJ., OCT. 2 - 5, 1994, NEW YORK, IEEE, US, vol. 3, 2 octobre 1994 (1994-10-02), pages 977-981, XP000506005 ISBN: 0-7803-1829-3**

## Description

La présente invention concerne une méthode et un dispositif de détection multi-utilisateur. Plus particulièrement, la présente invention concerne une méthode et un dispositif de détection multi-utilisateur à maximum de vraisemblance pour un système de télécommunication DS-CDMA (*Direct Sequence Code Division Multiple Access*).

Dans un système de télécommunication mobile DS-CDMA, la séparation des communications en provenance ou à destination des différents utilisateurs est réalisée en multipliant chaque symbole complexe d'un utilisateur par une séquence d'étalement propre à ce dernier, encore appelée pour cette raison signature de l'utilisateur. La fréquence d'étalement (chip rate) étant supérieure à la fréquence des symboles, le signal transmis par chaque utilisateur est distribué (ou étalé) dans l'espace des fréquences. Le rapport entre la bande occupée par le signal étalé et la bande occupée par le signal d'information est appelé facteur d'étalement. A la réception, la séparation d'un utilisateur donné est obtenue grâce à un filtrage adapté à la signature correspondante. Lorsque le canal de transmission présente une pluralité de trajets de propagation, la sortie du filtrage adapté comporte autant de pics de corrélation. Chaque trajet du canal peut être modélisé par un coefficient multiplicatif complexe et un retard. Les signaux s'étant propagés selon les différents trajets peuvent être alignés et combinés au moyen de coefficients complexes conjugués des coefficients de trajet, réalisant ainsi un filtrage adapté au canal de transmission. Pour simplifier la terminologie nous engloberons dans l'expression générale « filtrage adapté à l'utilisateur $k$ » à la fois l'opération de filtrage adapté à la signature de l'utilisateur $k$ et celle de filtrage adapté au canal de transmission.

Pour combattre l'interférence entre signaux à destination (liaison descendante) ou en provenance (liaison montante) des différents utilisateurs, il a été proposé des méthodes de détection multi-utilisateur et notamment des méthodes de détection itératives telles que celles connues sous le nom de PIC (*Parallel Interference Cancellation*) et SIC (*Serial Interference Cancellation*). Elles sont fondées sur l'itération d'un cycle d'élimination des interférences comportant l'estimation des symboles émis, l'évaluation des interférences et leur soustraction des signaux reçus. Bien que performantes, ces méthodes ne sont pas optimales dans la mesure où elles ne fournissent pas une estimation au sens du maximum de vraisemblance des symboles transmis par les différents utilisateurs.

Une méthode de détection multi-utilisateur à maximum de vraisemblance inspirée de l'algorithme de Viterbi a été proposée par S. Verdu dans un article intitulé « Minimum probability of error for asynchronous Gaussian multiple access channels » publié dans IEEE Transactions on Information Theory, pages 85-96, Janvier 1986 mais sa complexité est prohibitive car elle varie de manière exponentielle avec le nombre d'utilisateurs.

Plus récemment il a été proposé par L. Brunel et al., dans un article intitulé « Euclidian space lattice decoding for joint detection in CDMA system » publié dans Proceedings of ITW, page 129, Juin 1999, une méthode de détection multi-utilisateur à maximum de vraisemblance utilisant une représentation par réseau de points. Selon cette méthode on détermine un vecteur caractéristique du signal reçu représentant une statistique suffisante pour la détection au maximum de vraisemblance des symboles transmis par les différents utilisateurs. On montre sous certaines conditions que le vecteur caractéristique peut être représenté comme le point d'un réseau perturbé par un bruit. La détection consiste alors à rechercher le point du réseau le plus proche du point correspondant au vecteur reçu. Cependant, la dimension du réseau à utiliser étant de $2.K$ où $K$ est le nombre d'utilisateurs le nombre de points reste encore très élevé. Pour simplifier la détection, il a été proposé de limiter la recherche du plus proche voisin aux points du réseau appartenant à une sphère centrée autour du point reçu. Nous exposerons ci-après cette méthode de détection simplifiée dite « méthode de détection par sphères » :

Nous plaçons dans le contexte d'un système de télécommunication mobile à accès multiple avec étalement de spectre par séquences directes (DS-CDMA) comprenant $K$ utilisateurs communiquant de manière synchrone avec une station de base.

Soit $d_k(i)$ le symbole complexe émis par l'utilisateur $k$ à l'instant $i$. Ce symbole appartient à la constellation de modulation $\mathbf{A}_k$ utilisée par l'utilisateur $k$, que l'on appellera encore alphabet de symboles de l'utilisateur $k$.

Chaque utilisateur $k$ transmet un bloc de $N$ symboles avec une amplitude du signal $a_k$. Les symboles sont étalés par une signature complexe $s_k(t) = s_k^R(t) + j.s_k^I(t)$ de durée égale à la période symbole $T$ :

$$s_k(t) = 0 \text{ si } t \notin [0, T[$$

Les $K$ symboles complexes $d_k(i) = d_k^R(i) + j.d_k^I(i)$ transmis à l'instant $i$ sont placés dans un vecteur ligne de valeurs réelles $\mathbf{d}_2(i)$ défini comme :

$$\mathrm{d}_2(i) = (d_1^R(i), d_1^I(i), \ldots, d_K^R(i), d_K^I(i)) \tag{1}$$

Du fait de la synchronisation des utilisateurs, le signal modulé correspondant peut s'écrire, en fonction du temps $t$ :

$$S_t = \sum_{i=0}^{N-1} \sum_{k=1}^{K} a_k d_k(i) s_k(t-iT) \qquad (2)$$

Nous supposons que le canal est un canal idéal à bruit blanc additif gaussien. Soit $n=S_t+\eta_t$ le signal reçu au temps $t$ et $\eta_t$ un bruit gaussien complexe de moyenne nulle et dont les composantes ont une variance $N_0$.

Soit les vecteurs lignes $\mathbf{y}(i)=(y_1(i),..,y_K(i))$ et $\mathbf{y}_2(i)=(y_1^R(i),y_1^I(i),...,y_K^R(i),y_K^I(i))$ où $y_k(i)=y_k^R(i)+j.y_k^I(i)$ est la sortie complexe à l'instant $i$ du filtre adapté à l'utilisateur $k$ :

$$y_k(i) \overset{\Delta}{=} \int_{-\infty}^{+\infty} s_k^*(t-iT)n\,\mathrm{d}t$$

$$= \sum_{\ell=1}^{K} a_\ell d_\ell(i) \int_0^T s_\ell(t) s_k^*(t)\,\mathrm{d}t + n_k(i) \qquad (3)$$

$$= \sum_{\ell=1}^{K} a_\ell d_\ell(i) R_{\ell k} + n_k(i)$$

avec

$$R_{\ell k} = \int_0^T s_\ell(t) s_k^*(t)\,\mathrm{d}t = R_{\ell k}^R + j.R_{\ell k}^I$$

pour $k, \ell = 1,..., K$ et

$$n_k(i) = \int_0^T \eta_t . s_k^*(t-i.T)\,\mathrm{d}t$$

On notera $\mathbf{R}(i)$ la matrice d'autocorrélation des séquences d'étalement.
Si l'on décompose les éléments complexes de (3) en leurs parties réelles et imaginaires, on obtient :

$$[y_k^R(i)+j.y_k^I(i)] = \sum_{\ell=1}^{K} a_\ell [b_\ell^R(i) R_{\ell k}^R - b_\ell^I(i) R_{\ell k}^I] + j.\sum_{\ell=1}^{K} a_\ell [b_\ell^R(i) R_{\ell k}^I + b_\ell^I(i) R_{\ell k}^R] + [n_k^R(i)+j.n_k^I(i)] \qquad (4)$$

Soient $\mathbf{A}_2=\mathbf{Diag}(a_1,a_1,...,a_K,a_K)$ et $\mathbf{R}_2$ la matrice de taille $2K \times 2K$ telle que :

$$\mathbf{R}_2 = \begin{bmatrix} R_{11}^R & R_{11}^I & \cdots & R_{1K}^R & R_{1K}^I \\ -R_{11}^I & R_{11}^R & \cdots & -R_{1K}^I & R_{1K}^R \\ \vdots & \vdots & & \vdots & \vdots \\ R_{K1}^R & R_{K1}^I & \cdots & R_{KK}^R & R_{KK}^I \\ -R_{K1}^I & R_{K1}^R & \cdots & -R_{KK}^I & R_{KK}^R \end{bmatrix} \qquad (5)$$

L'équation (4) peut alors se mettre sous forme matricielle :

$$y_2(i)=d_2(i)M_2+n_2(i) \tag{6}$$

où $M_2$ est une matrice réelle de taille $2K \times 2K$ définie par $M_2=A_2R_2$ et où le vecteur de bruit $n_2(i)=(n_1^R(i),n_1^I(i),...,n_K^R(i),n_K^I(i))$ a pour matrice de covariance $N_0R_2$.

Nous démontrerons ci-après que $y_2(i)$, tel que donné par l'équation (6), peut être représenté comme un point d'un réseau $\Lambda_2$ de dimension $2.K$, de matrice génératrice $M_2$ corrompu par un bruit $n_2$.

Nous appellerons réseau réel de points $\Lambda$ de dimension $\kappa$ tout ensemble de vecteurs de $\mathbf{R}^\kappa$ vérifiant :

$$x=b_1v_1+b_2v_2+...+b_\kappa v_\kappa \text{ où } b_i \in Z, \forall i=1,...,\kappa$$

et où $\{v_1,v_2,...,v\kappa\}$ est une base sur $\mathbf{R}^\kappa$.

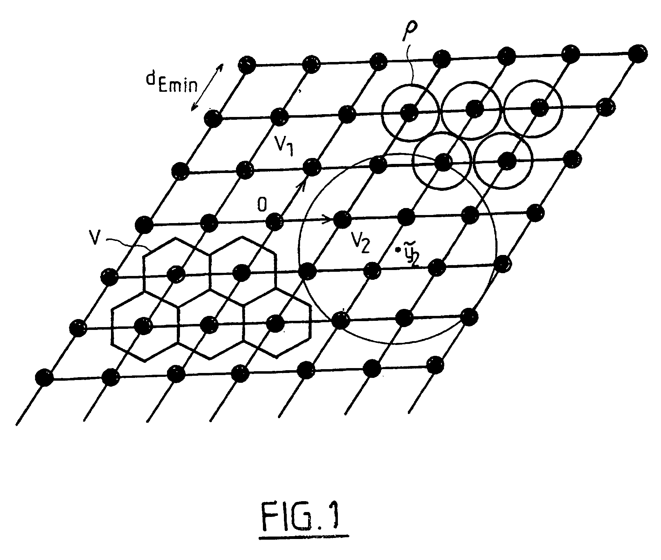

Un exemple de réseau de points de dimension 2 a été représenté en Fig. 1.

Les points du réseau forment un sous-groupe abélien additif de $\mathbf{R}^\kappa$, c'est d'ailleurs le plus petit sous-groupe de $\mathbf{R}^\kappa$ contenant les vecteurs $\{v_1,v_2,...,v_\kappa\}$ et un $\mathbf{Z}$-module de $\mathbf{R}^\kappa$. Ces vecteurs de base forment les lignes de la matrice génératrice $\mathbf{G}$ du réseau. On peut donc écrire

$$x = bG \text{ où } b=(b_1,...,b_\kappa) \in Z^\kappa. \tag{7}$$

La région délimitée par les vecteurs de base est appelée parallélotope fondamental et son volume, noté vol $(\Lambda)$ ou $\det(\Lambda)$, est nommé volume fondamental. Ce volume fondamental n'est autre que le module du produit vectoriel des $\kappa$ vecteurs de base et est donc égal à $|\det(\mathbf{G})|$ où det désigne le déterminant. S'il existe plusieurs choix possibles pour la matrice génératrice d'un même réseau, il n'existe par contre qu'une unique valeur pour le volume fondamental.

La région de Voronoï V ou cellule de Dirichlet d'un point $\mathbf{x}$ appartenant au réseau est l'ensemble des points de $\mathbf{R}^\kappa$ plus proches de $\mathbf{x}$ que de tout autre point du réseau. Le volume de cette région est égal au volume fondamental.

Le rayon d'empilement $\rho$ du réseau est le rayon de la plus grande sphère inscrite dans la région de Voronoï et le rayon de recouvrement celui de la plus petite sphère circonscrite à cette même région. Le rayon d'empilement est donc le rayon des sphères dont l'empilement constitue le réseau de points et le rayon de recouvrement est celui des sphères les plus petites qui, centrées sur les points du réseau, permettent de recouvrir tout l'espace $\mathbf{R}^\kappa$. La densité du réseau est le rapport entre le volume de la sphère de rayon $\rho$ et le volume fondamental. Enfin, le coefficient d'erreur (kissing number) $\tau(\Lambda)$ du réseau est le nombre de sphères tangentes à une même sphère dans l'empilement ou, en d'autres termes, le nombre de voisins d'un point du réseau, situés à la distance minimale $d_{Emin} = 2\rho$.

Considérons à nouveau l'équation (6). Les nombres complexes $d_k^R(i)+j.d_k^I(i)$ appartiennent à un alphabet fini (ou constellation) A de cardinal :

$$Card(\mathbf{A})=\prod_{k=1}^{\kappa}Card(\mathbf{A}_k) \tag{8}$$

Supposons par exemple que les composantes $d_k^R(i)$ et $d_k^I(i)$ soient des symboles de modulation PAM d'ordre M :

$$d_k^R(i) \in \{-M+1,-M+3,...,M-3,M-1\} \tag{9}$$

et

$$d_k^I(i) \in \{-M+1,-M+3,...,M-3,M-1\} \tag{10}$$

Si l'on effectue la transformation :

$$d'^R_k(i)=\frac{1}{2}(d_k^R(i)+M\text{-}1)$$

et

$$d'^I_k(i) = \frac{1}{2}(d^I_k(i) + M\text{-}1)$$

soit encore de manière vectorielle :

$$d'_2(i) = \frac{1}{2}(d_2(i) + v_M) \tag{11}$$

où $v_M = (M\text{-}1, M\text{-}1, .., M\text{-}1)$
les composantes $d'^R_k(i)$ et $d'^I_k(i)$ sont des éléments de **Z** et par suite $d'_2(i)$ est un vecteur de $\mathbf{Z}^{2K}$.

De manière générale, s'il existe une transformation affine transformant les composantes $d^R_k(i)$ et $d^I_k(i)$ en des éléments de **Z,** on peut représenter le vecteur $d'_2(i)$ par un vecteur de $\mathbf{Z}^{2K}$.

De manière similaire, on effectue la transformation correspondante sur $y_2(i)$, c'est-à-dire :

$$y'_2(i) = \frac{1}{2}(y_2(i) + v_M M_2) \tag{12}$$

Moyennant cette transformation, que nous supposerons implicite dans la suite, le vecteur $d_2(i)M_2(i)$ appartient alors à un réseau de points $\Lambda_2$ de dimension $2.K$ tel que défini par la relation (7) avec $\mathbf{G} = M_2(i)$. Le vecteur $y_2(i)$ peut donc être considéré comme un point du réseau $\Lambda_2$ corrompu par un bruit $n_2(i)$.

Si l'on suppose que les composantes du vecteur de bruit $n_2(i)$ sont des variables aléatoires indépendantes gaussiennes centrées, le problème de la détection au sens du maximum de vraisemblance des symboles émis par les différents utilisateurs se ramène à la recherche du point $z_2$ du réseau $\Lambda_2$ tel que sa distance à $y_2(i)$ soit minimale.

En réalité, les composantes du vecteur de bruit $n_2(i)$ sont corrélées et la matrice de covariance de $n_2(i)$ est $N_0 R_2$.

Afin de se ramener au cas décorrélé il faut effectuer préalablement au décodage une opération de blanchiment du bruit.

La matrice **R** étant hermitienne, la matrice d'autocorrélation $\mathbf{R_2}$ est symétrique définie positive et peut donc faire l'objet d'une factorisation de Cholesky :

$$R_2 = W_2\, W^T_2 \tag{13}$$

où $W_2$ est une matrice triangulaire inférieure de taille $2K \times 2K$.
On définit un vecteur d'observation blanchie :

$$\tilde{y}_2(i) = y_2(i)W_2^{T^{-1}} \tag{14}$$

ainsi qu'un nouveau réseau de points $\Omega_2$ constitué des vecteurs de composantes

$$\left(\tilde{x}^R_1(i), \tilde{x}^I_1(i), ..., \tilde{x}^R_K(i), \tilde{x}^I_K(i)\right)$$

avec

$$\tilde{x}_2(i) = x_2(i)W_2^{T^{-1}}$$

où $x_2(i)$ est un vecteur de composantes $(x^R_1(i), x^I_1(i), ..., x^R_K(i), x^I_K(i))$ appartenant à $\Lambda_2$.

On peut facilement montrer, qu'après blanchiment, la matrice de covariance du bruit filtré $n_2(i)W^{T^{-1}}$ est égale à $N_0 I_{2K}$ où $I_{2K}$ est la matrice identité de dimension $2K$. La détection comprend donc une première étape de blanchiment du vecteur d'observation suivie d'une étape de recherche du plus proche voisin au sein du réseau de points $\Omega_2$.

Pour réduire le nombre de points à tester, comme illustré en Fig. 1, on peut limiter la recherche à une sphère centrée autour du point $\tilde{y}_2$. En pratique, le choix du . rayon de la sphère résulte d'un compromis : il ne doit pas être trop grand pour ne pas conduire à un nombre de points trop élevé et suffisamment grand pour inclure au moins le plus proche voisin.

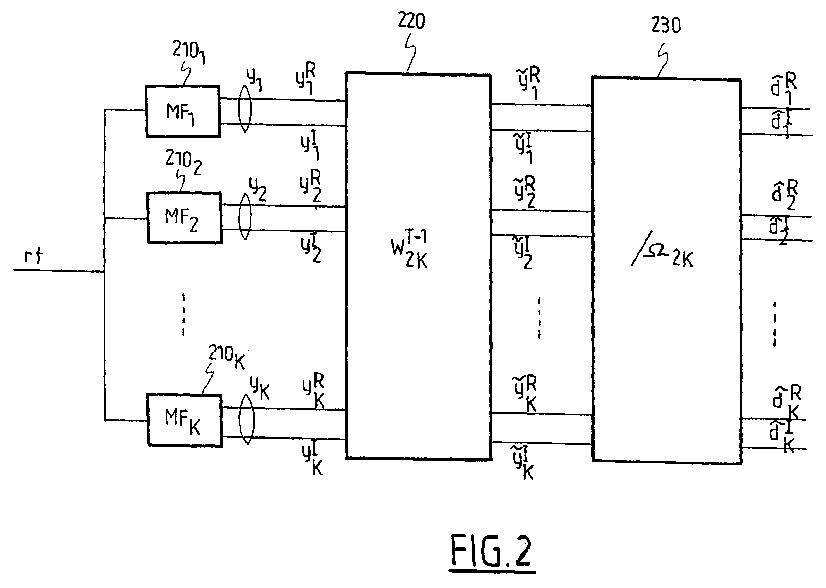

La Fig. 2 représente schématiquement un dispositif de détection multi-utilisateur utilisant une méthode de détection par sphères. Le signal reçu $n$ est filtrée par une batterie de filtres adaptés à chacun des utilisateurs, $210_1$,..., $210_K$. Les composantes réelles et imaginaires du vecteur d'observation $\mathbf{y}_2(i)$ en sortie des filtres adaptés sont transmis à une unité de calcul matriciel effectuant l'opération de blanchiment spectral selon la relation (14). Les composantes réelles et imaginaires du vecteur blanchi $\tilde{\mathbf{y}}_2(i)$ sont ensuite transmises à une unité de détection par sphères recherchant le plus proche voisin du point reçu au sein du réseau $\Omega_2$ de dimension $2.K$. Les coordonnées du plus proche voisin donnent directement les composantes réelles et imaginaires des symboles estimés $d_k(i)$ pour les différents utilisateurs.

On peut montrer que la méthode de détection par sphères telle qu'exposée ci-dessus possède une complexité en $O(K^6)$ ce qui peut s'avérer très pénalisant lorsque le nombre d'utilisateurs est élevé.

Le but de la présente invention est de proposer sous certaines conditions une simplification de la méthode de détection par sphères.

A cette fin, l'invention est définie par une méthode de détection d'une pluralité de symboles ($\mathbf{d}_k(i)$) transmis par ou pour une pluralité $K$ d'utilisateurs, chaque symbole appartenant à une constellation de modulation et faisant l'objet d'un étalement spectral par une séquence d'étalement, ladite méthode comprenant une étape de filtrage adapté pour fournir un vecteur complexe ($\mathbf{y}(i), \tilde{\mathbf{y}}(i)$) caractéristique dudit signal reçu, ledit vecteur complexe étant décomposé en un premier vecteur ($\mathbf{y}^R(i), \tilde{\mathbf{y}}^R(i)$) et un second vecteur ($\mathbf{y}^I(i), \tilde{\mathbf{y}}^I(i)$) et au moins les plus proches voisins des premier et second vecteurs étant recherchés au sein d'un réseau de points ($\Lambda, \Omega$) généré par lesdites constellations de modulation, les symboles transmis étant estimés à partir des composantes desdits plus proches voisins.

Avantageusement, les séquences d'étalement ($s_k(t)$) sont constitués de multiples réels ($s_k^0(t)$) d'un même coefficient complexe ($\sigma$).

Selon un mode de réalisation de l'invention, la recherche est limitée à un premier ensemble de points du réseau appartenant à une première zone prédéterminée ($\Sigma_R$) autour du premier vecteur et à un second ensemble de points du réseau appartenant à une seconde zone prédéterminée ($\Sigma_I$) autour du second vecteur.

De même la recherche peut être limitée à un premier ensemble de points du réseau appartenant à une première zone prédéterminée ($\Sigma_R$) autour de l'origine et à un second ensemble de points du réseau appartenant à une seconde zone prédéterminée ($\Sigma_I$) autour de l'origine.

Lesdites première et seconde zones prédéterminées sont par exemple des sphères.

Avantageusement, la recherche du plus proche voisin du premier vecteur est effectuée sur une pluralité de composantes de ce dernier, la recherche étant limitée pour chacune desdites composantes à un intervalle défini par une borne inférieure et une borne supérieure, lesdites bornes étant choisies de manière à ce que ledit intervalle ne comprenne pas des points relatifs à des symboles ne pouvant appartenir à la constellation de modulation.

De même la recherche du plus proche voisin du second vecteur peut être effectuée sur une pluralité de composantes de ce dernier, la recherche étant limitée pour chacune desdites composantes à un intervalle défini par une borne inférieure et une borne supérieure, lesdites bornes étant choisies de manière à ce que ledit intervalle ne comprenne pas des points relatifs à des symboles ne pouvant appartenir à la constellation de modulation.

Préalablement à la recherche du plus proche voisin, le premier vecteur ($\mathbf{y}^R(i)$) est avantageusement soumis à un traitement matriciel visant à substantiellement décorréler les différentes composantes de bruit de ce dernier.

De même, préalablement à la recherche du plus proche voisin, le second vecteur ($\mathbf{y}^I(i)$) peut être soumis à un traitement matriciel visant à substantiellement décorréler les différentes composantes de bruit de ce dernier.

Selon une variante de réalisation de l'invention, ladite étape de recherche est étendue à celle d'un premier ensemble de points plus proches voisins dudit premier vecteur, dits premiers voisins, et à un second ensemble de points plus proches voisins dudit second vecteur, dits seconds voisins, et les symboles transmis sont estimés de manière souple à partir des symboles générant lesdits premiers et second voisins et des distances séparant lesdits premiers voisins dudit premier vecteur d'une part et lesdits seconds voisins dudit second vecteur d'autre part.

Selon un mode de réalisation particulier de l'invention, on détermine à partir des symboles estimés les contributions de chaque utilisateur aux signaux obtenus par l'étape de filtrage adapté et, pour un utilisateur $k$ donné, on élimine en sortie de l'étape de filtrage adapté les contributions des autres utilisateurs correspondant aux symboles déjà estimés. Alternativement, on détermine les contributions de chaque utilisateur au signal reçu à partir des symboles estimés et, pour un utilisateur $k$ donné, on élimine en entrée de l'étape de filtrage adapté les contributions des autres utilisateurs correspondant aux symboles déjà estimés:

Si les symboles desdits $K$ utilisateurs sont transmis de manière synchrone, ledit réseau de points sera préférablement de dimension $K$ .

Si les symboles desdits $K$ utilisateurs sont transmis de manière asynchrone et se propagent selon une pluralité de trajets, la dimension du réseau sera préférablement égale au nombre de symboles des différents utilisateurs pouvant interférer et non encore estimés.

La présente invention est également définie par un dispositif de détection d'une pluralité de symboles ($\mathbf{d}_k(i)$) transmis par ou pour une pluralité $K$ d'utilisateurs, chaque symbole appartenant à une constellation de modulation et faisant l'objet d'un étalement spectral par une séquence d'étalement, le dispositif comprenant des moyens pour mettre en oeuvre la méthode exposée ci-dessus.

Ce dispositif pourra en particulier être utilisé dans un récepteur de système de télécommunication mobile DS-CDMA.

Les caractéristiques de l'invention mentionnées ci-dessus, ainsi que d'autres, apparaîtront plus clairement à la lecture de la description suivante faite en relation avec les figures jointes, parmi lesquelles :

La Fig. 1 représente un réseau de points utile à la méthode de détection employée dans le récepteur illustré en Fig. 2;
La Fig. 2 représente de manière schématique la structure d'un récepteur DS-CDMA multi-utilisateur utilisant une méthode de détection par sphères;
La Fig. 3 représente de manière schématique la structure d'un dispositif de détection multi-utilisateur selon un premier mode de réalisation de l'invention.
La Fig. 4 représente de manière schématique la structure d'un dispositif de détection multi-utilisateur selon un second mode de réalisation de l'invention.

L'idée à la base de l'invention est d'abaisser la dimension du réseau de points en utilisant des séquences d'étalement de type particulier pour les différents utilisateurs.

Considérons à nouveau un système de télécommunication DS-CDMA avec $K$ utilisateurs synchrones. Si nous choisissons des séquences d'étalement $s_k(t)$ à valeurs réelles, les termes imaginaires de la matrice $\mathbf{R}_2$ et par suite de la matrice $\mathbf{M}_2(i)$ sont nuls. Par suite, on peut modéliser le système par un réseau de points réel $\Lambda$ de dimension $K$ et de matrice génératrice $\mathbf{M}(i)$ :

$$y^R(i)=d^R(i)M(i)+n^R(i) \tag{15}$$

$$y^I(i)=d^I(i)M(i)+n^I(i) \tag{16}$$

où $\mathbf{y}^R(i),\mathbf{d}^R(i),\mathbf{n}^R(i)$ (resp. $\mathbf{y}^I(i),\mathbf{d}^I(i),\mathbf{n}^I(i)$) sont les vecteurs constitués des parties réelles (resp. des parties imaginaires) des composantes de $\mathbf{y}(i),\mathbf{d}(i),\mathbf{n}(i)$ ; $\mathbf{M}(i)=\mathbf{AR}(i)$ où $\mathbf{R}(i)$ est la matrice constituée par les coefficients

$$R_{lk}=\int_0^T s_l(t)s_k(t)\mathrm{d}t$$

et $\mathbf{A}$ est le vecteur des amplitudes des $K$ utilisateurs.

Les vecteurs d'observation $\mathbf{y}^R(i)$ et $\mathbf{y}^I(i)$ appartiennent à $\mathbf{R}^K$. Après transformation éventuelle selon une relation du type de celle de (12), les vecteurs $\mathbf{y}^R(i)$ et $\mathbf{y}^I(i)$ peuvent être considérés comme des points d'un réseau $\Lambda$ de matrice génératrice $\mathbf{M}(i)$ corrompus par du bruit.

On montre aisément que les vecteurs de bruit $\mathbf{n}^R(i)$ et $\mathbf{n}^I(i)$ ont tous deux pour matrice de covariance $N_0.\mathbf{R}(i)$. $\mathbf{R}(i)$ étant une matrice symétrique définie positive on peut la factoriser selon une décomposition de Cholesky : $\mathbf{R} = \mathbf{WW}^T$ où $\mathbf{W}$ est une matrice réelle triangulaire inférieure de taille $K$x$K$. Afin de décorréler les composantes de bruit, les vecteurs d'observation réels $\mathbf{y}^R(i)$ et $\mathbf{y}^I(i)$ sont tout d'abord soumis à une opération de blanchiment :

$$\widetilde{y}^R(i)=y^R(i)W^{T^{-1}} \tag{17}$$

$$\widetilde{y}^I(i)=y^I(i)W^{T^{-1}} \tag{18}$$

Dans un deuxième temps, on recherche les plus proches voisins des vecteurs $\tilde{\mathbf{y}}^R(i)$ et $\tilde{\mathbf{y}}^I(i)$ appartenant au réseau de points $\Omega$ constitué des vecteurs

$$\tilde{\mathbf{x}}(i)=\mathbf{x}(i)\mathbf{W}^{T^{-1}}$$

où $\mathbf{x}(i)$ appartient à $\Lambda$. On peut montrer facilement, qu'après blanchiment, les matrices de covariance des bruits filtrés $\mathbf{n}^R(i)\mathbf{W}^{T\text{-}1}$ et $\mathbf{n}^I(i)\mathbf{W}^{T\text{-}1}$ sont toutes deux égales à $N_0\mathbf{I}_K$ où $\mathbf{I}_K$ est la matrice identité de dimension $K$.

On voit donc que le fait d'utiliser des signatures réelles conduit à une recherche de deux plus proches voisins dans un même réseau de dimension $K$ alors que dans le cas général, complexe, le décodage nécessite une recherche dans un réseau de dimension $2K$. En fait on peut facilement montrer que le résultat précédent s'étend à tout jeu de signatures portées par un même nombre complexe, c'est-à-dire telles que : $s_k(t)=\sigma.s_k^0(t)$ où $\sigma$ est un nombre complexe et $s_k^0(t)$ est réel. Ce sera bien entendu en particulier le cas si toutes les signatures sont imaginaires.

La recherche du plus proche voisin pour le vecteur $\tilde{\mathbf{y}}^I(i)$ se faisant selon le même principe que pour $\tilde{\mathbf{y}}^R(i)$, nous n'exposerons que la première. Cette recherche consiste à déterminer le point x minimisant la métrique :

$$m\left(\tilde{\mathbf{y}}^R/\mathbf{x}\right)=\sum_{i=1}^{K}\left|\tilde{y_i}^R-x_i\right|^2=\left\|\tilde{\mathbf{y}}^R-\mathbf{x}\right\|^2 \qquad (19)$$

où

$$\tilde{\mathbf{y}}^R=\mathbf{x}+\mathbf{n}^R$$

et $\mathbf{x}=(x_1,...,x_K)$ est un point appartenant au réseau $\Omega$.

Alternativement, on notera que le vecteur $\mathbf{y}^R(i)$ n'a pas besoin d'être blanchi si l'on utilise une métrique basée sur la matrice de covariance :

$$m\left(\mathbf{y}^R/\mathbf{x}\right)=(\mathbf{y}^R-\mathbf{x})\mathbf{R}^{-1}(\mathbf{y}^R-\mathbf{x})^T \qquad (20)$$

On désignera par la suite, pour des raisons de simplification, $\mathbf{z}$ le vecteur d'observation blanchi ($\tilde{\mathbf{y}}^R(i)$) ou non ($\mathbf{y}^R(i)$) et $\|.\|$ la métrique intervenant dans la relation (19) ou (20).

Les points du réseau $\Omega$ sont constitués des vecteurs $\mathbf{x}$ tels que $\mathbf{x}=\mathbf{bG}$ où $\mathbf{G}$ est la matrice génératrice du réseau et $\mathbf{b}=(b_1,...,b_K)$, les composantes $b_i$ appartiennent à l'anneau des entiers $\mathbf{Z}$.

Le détecteur restreint avantageusement son calcul de métrique aux points qui sont situés à l'intérieur d'une zone de la constellation située autour du point reçu, préférentiellement à l'intérieur d'une sphère de rayon donné $\sqrt{C}$ centrée sur le point reçu $\mathbf{z}$. Seuls les points du réseau situés à une distance quadratique inférieure à $C$ du point reçu sont donc considérés pour la minimisation de la métrique.

En pratique, le décodeur effectue la minimisation suivante :

$$\min_{\mathbf{x}\in\Omega}\|\mathbf{z}-\mathbf{x}\|=\min_{\mathbf{w}\in\mathbf{z}-\Omega}\|\mathbf{w}\| \qquad (21)$$

Pour ce faire, le décodeur recherche le plus petit vecteur $\mathbf{w}$ dans l'ensemble translaté $\mathbf{z}-\Omega$. On peut exprimer les vecteurs $\mathbf{z}$ et $\mathbf{w}$ comme suit :

$$z=\rho G \qquad \text{avec} \qquad \rho=(\rho_1,...,\rho_K)$$

$$w=\xi G \qquad \text{avec} \qquad \xi=(\xi_1,...,\xi_K) \qquad (22)$$

Il est important de noter que $\rho$ et $\xi$ sont des vecteurs réels. Comme $\mathbf{w}=\mathbf{z}-\mathbf{x}$ où $\mathbf{x}$ appartient au réseau $\Omega$, on

a la relation $\xi_i = \rho_i - b_i$ pour $i=1,...,K$ avec

$$\mathbf{w} = \sum_{i=1}^{K} \xi_i \mathbf{v}_i$$

Le vecteur $\mathbf{w}$ est un point du réseau dont les coordonnées $\xi_j$ sont exprimées dans le repère translaté centré sur le point reçu $\mathbf{z}$. Le vecteur $\mathbf{w}$ appartient à une sphère de rayon quadratique $C$ centrée en $\mathbf{0}$ si :

$$\|\mathbf{w}\|^2 = Q(\xi) = \xi GG^T \xi^T \leq C \tag{23}$$

Dans le nouveau système de coordonnées défini par $\xi$, la sphère de rayon quadratique $C$ centrée en y est donc transformée en une ellipse centrée à l'origine. La factorisation de Cholesky de la matrice de Gram $\Gamma = \mathbf{GG}^T$ donne $\Gamma = \Delta\Delta^T$, où $\Delta$ est une matrice triangulaire inférieure d'éléments $\delta_{ij}$.

Il faut noter que si le vecteur y a été blanchi, il n'y a pas lieu d'effectuer cette factorisation car la matrice génératrice de $\Omega$ vaut $\mathbf{AW}$ et est donc déjà triangulaire inférieure. Toutefois, dans le cas où l'on n'a pas procédé au blanchiment préalable, la décomposition de Cholesky est nécessaire. Dans tous les cas, on peut écrire :

$$Q(\xi) = \xi \Delta\Delta^T \xi^T = \left\|\Delta^T \xi^T\right\|^2 = \sum_{i=1}^{K} \left( \delta_{ii}\xi_i + \sum_{j=i+1}^{K} \delta_{ji}\xi_j \right)^2 \leq C \tag{24}$$

En posant

$$q_{ii} = \delta_{ii}^2 \text{ pour } i=1,...,K$$

$$q_{ij} = \frac{\delta_{ij}}{\delta_{jj}} \text{ pour } j=1,...,K; \ i=j+1,...,K$$

on obtient :

$$Q(\xi) = \sum_{i=1}^{K} q_{ii} \left( \xi_i + \sum_{j=i+1}^{K} q_{ji}\xi_j \right)^2 \tag{25}$$

En s'intéressant tout d'abord à la plage de variations possibles de $\xi_K$, puis en rajoutant une à une les composantes, on obtient les $K$ inégalités suivantes, qui définissent tous les points à l'intérieur de l'ellipse :

$$q_{KK}\xi_K^2 \leq C$$
$$q_{K-1,K-1}\left(\xi_{K-1} + q_{K,K-1}\xi_K\right)^2 + q_{KK}\xi_K^2 \leq C \tag{26}$$
$$\forall \ell \in \{1;K\}, \sum_{i=\ell}^{K} q_{ii} \left( \xi_i + \sum_{j=i+1}^{K} q_{ji}\xi_j \right)^2 \leq C$$

On peut montrer que les inégalités (26) imposent aux composantes entières de b de satisfaire à :

$$\left\lceil -\sqrt{\frac{C}{q_{KK}}} + \rho_K \right\rceil \leq b_K \leq \left\lfloor \sqrt{\frac{C}{q_{KK}}} + \rho_K \right\rfloor$$

$$\left\lceil -\sqrt{\frac{C - q_{KK}\xi_K^2}{q_{K-1,K-1}}} + \rho_{K-1} + q_{K,K-1}\xi_K \right\rceil \leq b_{K-1} \leq \left\lfloor -\sqrt{\frac{C - q_{KK}\xi_K^2}{q_{K-1,K-1}}} + \rho_{K-1} + q_{K,K-1}\xi_K \right\rfloor$$

$$\left\lceil -\sqrt{\frac{1}{q_{ii}}\left(C - \sum_{\ell=i+1}^{K} q_{\ell\ell}\left(\xi_\ell + \sum_{j=\ell+1}^{K} q_{j\ell}\xi_j\right)^2\right)} + \rho_i + \sum_{j=i+1}^{K} q_{ji}\xi_j \right\rceil \leq b_i \qquad (27)$$

$$b_i \leq \left\lfloor \sqrt{\frac{1}{q_{ii}}\left(C - \sum_{\ell=i+1}^{K} q_{\ell\ell}\left(\xi_\ell + \sum_{j=\ell+1}^{K} q_{j\ell}\xi_j\right)^2\right)} + \rho_i + \sum_{j=i+1}^{K} q_{ji}\xi_j \right\rfloor$$

où $\lceil x \rceil$ est le plus petit entier supérieur au réel $x$ et $\lfloor x \rfloor$ est le plus grand entier inférieur au réel $x$.

Le décodeur possède $K$ compteurs internes, à savoir un compteur par dimension, chaque compteur comptant entre une borne inférieure et supérieure comme indiqué en (27), étant entendu qu'à chaque compteur est associé un couple de bornes particulier. En pratique, ces bornes peuvent être mises à jour de manière récursive.

Avantageusement, on liste toutes les valeurs du vecteur **b** pour lesquelles le point correspondant du réseau **x** = **bG** est situé en deçà de la distance quadratique $C$ du point reçu. Les points du réseau situés en dehors de la sphère considérée ne sont pas testés. Avantageusement, pour chaque composante $1,..,K$ les bornes supérieure et inférieure de la recherche seront ajustées ne manière à ne pas contenir des points qui sont certainement en dehors de la constellation. Ainsi les compteurs ne perdent pas de temps à parcourir des points qui, de toutes façons, ne sont pas des solutions. Par exemple, si tous les utilisateurs emploient une même constellation de modulation PAM de taille $M$, les bornes de recherche ne pourront sortir de l'intervalle [0,M-1].

De plus, la recherche à l'intérieur de la sphère peut être considérablement accélérée en mettant à jour le rayon $\sqrt{C}$ avec la dernière norme euclidienne calculée $\|\mathbf{w}\|$. Finalement, on sélectionne comme meilleur point **x** celui associé à la plus petite norme $\|\mathbf{w}\|$.

De manière à être sûr que le décodeur trouve au moins un point du réseau, on choisit avantageusement un rayon de recherche supérieur au rayon de recouvrement du réseau. On peut par exemple le prendre égal à la borne supérieure de Rogers :

$$\sqrt{C}^K = (K\log K + K\log\log K + 5K) \times \frac{|\det(\mathbf{G})|}{V_K} \qquad (28)$$

où $V_K$ est le volume d'une sphère de rayon unité dans l'espace réel.

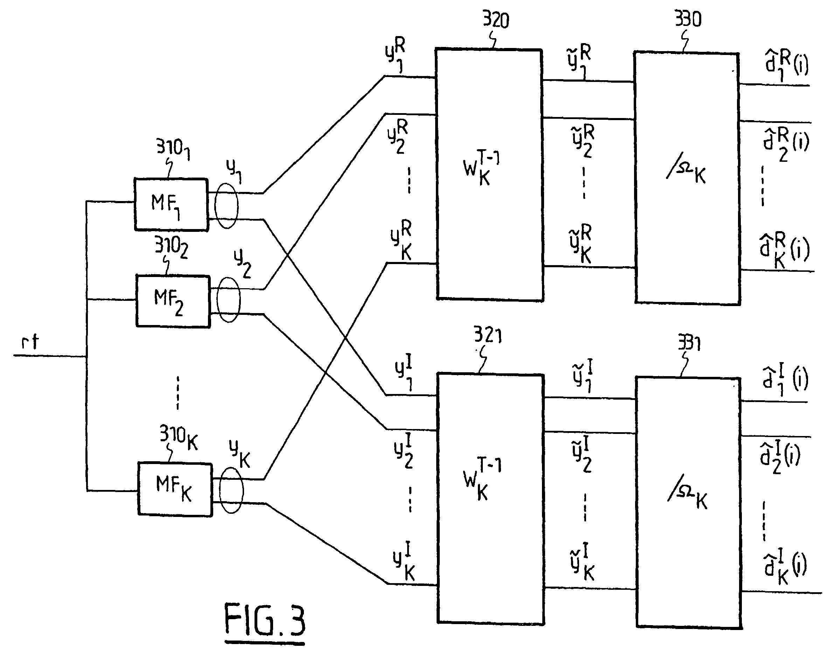

La Fig. 3 illustre schématiquement un dispositif de détection multi-utilisateur selon un premier mode de réalisation de l'invention. Le signal reçu est tout d'abord filtré par une batterie de filtres adaptés aux différents utilisateurs, $310_1,..,310_K$. Le vecteur d'observation en sortie des filtres adaptés est décomposé en un vecteur d'observation réel $\mathbf{y}^R(i) = (y_1^R(i),...,y_K^R(i))$ et un vecteur d'observation imaginaire $\mathbf{y}^I(i) = (y_1^I(i),..,y_k^I(i))$. Après transformation éventuelle du type de (12) (non représentée), les vecteurs $\mathbf{y}^R(i)$ et $\mathbf{y}^I(i)$ subissent un blanchiment spectral en 320 et 321 afin de décorréler les échantillons de bruit. Les vecteur blanchis $\widetilde{\mathbf{y}}^R(i)$ et $\widetilde{\mathbf{y}}^I(i)$ font ensuite l'objet d'une recherche de plus proche voisin comme décrit plus haut dans les détecteurs par sphères 330 et 331. Le point trouvé par le détecteur 330 donne (moyennant éventuellement une transformation inverse à celle de (12)) les composantes réelles des symboles estimés pour les $K$ utilisateurs. De même, le détecteur 331 donne les composantes imaginaires de ces symboles estimés.

Au lieu de fournir directement des symboles de la constellation, le récepteur peut être adapté pour fournir les symboles sous forme de décisions souples. Dans ce cas, la recherche à l'intérieur de la sphère de détection ne se limite plus au plus proche voisin mais est étendue à une pluralité des plus proches voisins du point relatif au signal reçu.

Plus précisément, soit $\Sigma_R$ et $\Sigma_I$ les sphères centrées respectivement autour de $\widetilde{\mathbf{y}}^R(i)$ et $\widetilde{\mathbf{y}}^I(i)$. On associe à tout couple $d^{m,m'}(i) = (\nu_m, \nu_{m'})$ de points voisins appartenant à $(\Sigma_R, \Sigma_I)$ tel que les $K$ composantes $d_k^{m,m'}(i)$ appartiennent aux constellations de modulation des utilisateurs, une probabilité a posteriori $p^{m,m'}$, probabilité que le vecteur $d_k^{m,m'}(i)$ défini par ce point ait été émis, étant donné l'observation $\widetilde{\mathbf{y}}(i)$. Soit $\Theta$ l'ensemble de ces couples. On définit un symbole souple d'un utilisateur $k$ comme le $M_k$-uplet $(\pi_l,..., \pi_{Mk})$ où $M_k$ est le cardinal de la constellation de modulation de l'utilisateur $k$ et où $\pi_j$ est la probabilité que le symbole $s_j$ ait été émis. On a :

$$\pi_j = p(s_j/\widetilde{\mathbf{y}}) = \sum_{(v_m, v_{m'}) \in \Theta} p(s_j/d_k^{m,m'}) . p^{m,m'} \tag{29}$$

Les probabilités a posteriori $p^{m,m'}$ pourront par exemple être exprimées en fonction des distances $\lambda_m$ et $\lambda_{m'}$ séparant les vecteurs $\widetilde{\mathbf{y}}^R(i)$ et $\widetilde{\mathbf{y}}^I(i)$ de $v_m$ et $v_{m'}$.

L'équation (2) présupposait que les signaux des différents utilisateurs étaient synchrones. Lorsque cette hypothèse n'est pas valide, un symbole étalé d'un utilisateur $k$ à un instant donné peut interférer avec deux symboles étalés successifs d'un autre utilisateur $k'$. Si nous supposons que la dispersion des retards de transmission $\tau_k$ des différents utilisateurs est inférieure à une période symbole $T$, le symbole d'un utilisateur $k$ émis à l'instant $i$, $d_k(i)$ peut interférer avec les symboles $d_{k'}(i-1)$ et $d_{k'}(i+1)$ d'un utilisateur $k'$. On peut supposer sans perte de généralité que $0 \leq \tau_1 \leq ... \leq \tau_k \leq ... \leq \tau_K < T$. Après que les symboles $d_k(i-1)$ pour tous les utilisateurs $k=1..K$ sont détectés, on commence la détection des symboles relatifs à l'instant $i$ en commençant par l'utilisateur le plus précoce (ici l'utilisateur 1) et finissant par l'utilisateur le plus tardif (ici l'utilisateur $K$). La détection de $d_k(i)$ dépend de trois vecteurs : le vecteur $\mathbf{d_P} = (d_l(i),...,d_{k-1}(i),d_k(i-1),d_{k+1}(i-1),...,d_K(i-1))$ relatif aux symboles déjà détectés, le vecteur $\mathbf{d_F} = (d_1(i+1),...,d_{k-1}(i+1),d_k(i),d_{k+1}(i),..,d_K(i))$ relatif aux symboles futurs et le vecteur d'observation $\mathbf{y}(i)$. On peut montrer que le vecteur d'observation complexe peut s'écrire sous la forme d'une contribution passée et d'une contribution future :

$$y = d_P AR_P + d_F AR_F + n \tag{30}$$

où $\mathbf{n}$ est un vecteur de bruit de matrice de covariance $N_0 \mathbf{R_F}$, $\mathbf{R_P}$ et $\mathbf{R_F}$ sont respectivement la matrice de corrélation des signatures avec les signatures passées et la matrice de corrélation des signatures avec les signatures futures.

Lorsque les signatures sont à valeurs réelles (ou plus généralement sont des multiples réels d'un même nombre complexe) l'équation (30) peut se décomposer sous la forme de deux équations ne faisant intervenir que des vecteurs réels , de manière analogue aux équations (15) et (16) :

$$y^R = d_P{}^R AR_P + d_P{}^R AR_F + n^R \tag{31}$$

$$y^I = d_P{}^I AR_P + d_P{}^I AR_F + n^I \tag{32}$$

Au lieu d'effectuer la détection par sphères sur les vecteurs d'observation $\mathbf{y}^R$ et $\mathbf{y}^I$ celle-ci opèrera sur les vecteurs débarrassés des interférences dues aux symboles passés déjà estimés à savoir : $\mathbf{y}^R - \mathbf{d_P}^R \mathbf{AR_P}$ et $\mathbf{y}^I - \mathbf{d_P}^I \mathbf{AR_P}$.

Alternativement, au lieu de procéder à l'élimination soustractive des interférences au niveau du vecteur d'observation, cette élimination peut être envisagée de manière équivalente, en amont, sur les signaux étalés. Les symboles estimés sont réétalés spectralement et les contributions des différents utilisateurs au signal reçu sont soustraites une à une, à la volée (au fur et à mesure de leur réétalement), en entrée des filtres adaptés. Les entrées des filtres adaptés recevront donc les signaux épurés des contributions passées à savoir $n - I_k(t)$ où :

$$I_k(t) = \sum_{k' < k} a_{k'} \hat{d}_{k'}(i) s_{k'}(t - iT - \tau_{k'}) + \sum_{k' > k} a_{k'} \hat{d}_{k'}(i-1) s_{k'}(t - (i-1)T - \tau_{k'}) \tag{33}$$

Le premier terme de droite dans l'équation (33) représente la contribution des utilisateurs qui sont en avance sur l'utilisateur $k$ et pour lesquels par conséquent une estimation des symboles $d_{k'}(i)$ est déjà disponible. Le second terme représente la contribution des utilisateurs qui sont en retard sur l'utilisateur $k$: la contribution due aux symboles $d_{k'}(i)$ ne peut bien entendu être évaluée à l'instant où le symbole $d_k(i)$ est désétalé. En revanche, la contribution due aux symboles précédents $d_{k'}(i-1)$ peut être évaluée puisque une estimation des symboles $d_{k'}(i-1)$ est déjà disponible.

Il importe de noter que, contrairement au cas synchrone où l'étape de détection par sphères estimait simultanément tous les symboles $d_k(i)$, dans le cas asynchrone, les symboles des différents utilisateurs sont estimés les uns après les autres suivant leur ordre d'arrivée.

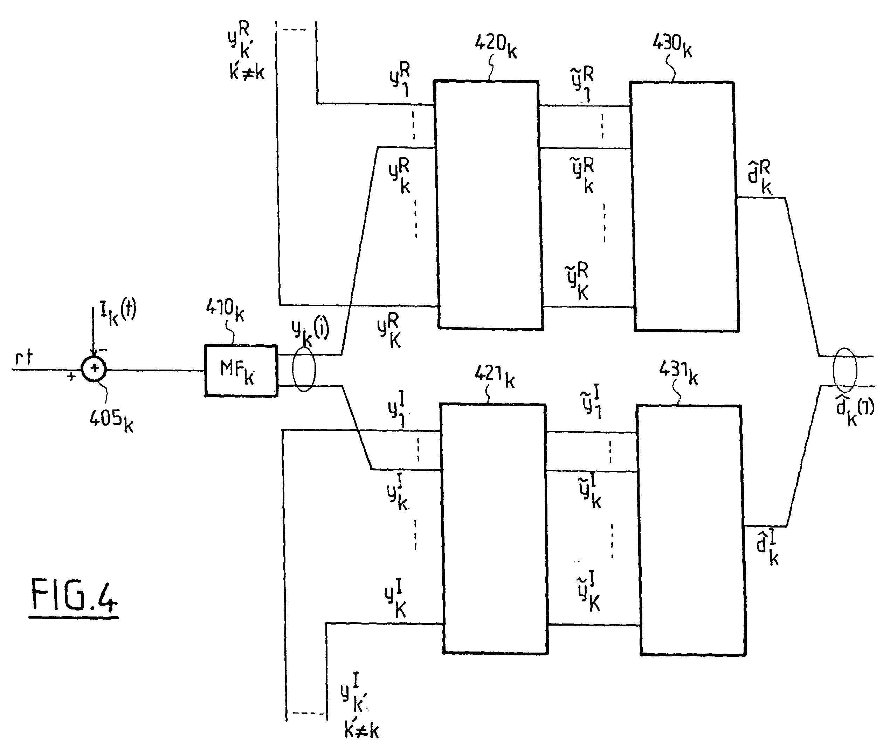

La Fig. 4 illustre un second mode de réalisation de l'invention mettant en oeuvre une élimination soustractive des interférences pour des utilisateurs asynchrones. Pour simplifier la représentation, seule la branche de détection concernant un utilisateur $k$ a été illustrée. La somme $I_k(t)$ symbolise la somme des contributions des autres utilisateurs et est soustraite en $405_k$ au signal $n$ en entrée du filtre adapté $410_k$. La détection par sphères pour l'utilisateur $k$ démarre à l'instant où le symbole $d_k(i)$ est désétalé. Il faut noter qu'à cet instant les symboles interférents non encore estimés des autres utilisateurs n'auront fait l'objet que d'un désétalement partiel (sauf bien entendu si les symboles interférents sont synchrones). Le module $430_k$ (resp. $431_k$) opère sur les composantes en sortie de $420_k$ (resp. $421_k$). Alternativement les sorties de tous les modules $430_k$ (resp. $431_k$) pourront être démultiplexées pour être traitées par un module commun 440 travaillant $K$ fois plus rapidement. A la différence de la Fig. 3, ici seule la kième sortie des modules $430_k$ et $431_k$ est utilisée pour fournir le symbole estimé $d_k(i)$. Le symbole $d_k(i)$ est ensuite réétalé et la contribution $a_k d_k(i) s_k$ $(t\text{-}iT\text{-}\tau_k)$ de l'utilisateur $k$ est évaluée puis soustraite en entrée de chacun des filtres adaptés $410_k$, via $I_k(t)$.

Si les canaux de transmission des différents utilisateurs sont du type multi-trajet, le problème de l'élimination des interférences est plus complexe puisqu'il faut considérer les interférences entre tous les trajets de tous les utilisateurs. Le signal reçu peut s'écrire :

$$n = \sum_{i=0}^{N-1} \sum_{k=1}^{K} \sum_{p=1}^{P_k} a_k c_{pk} d_k(i) s_k(t - iT - \tau_{pk}) + \eta_{pk}(t) \tag{34}$$

où $P_k$ est le nombre de trajets du canal de transmission de l'utilisateur $k$, $\tau_{pk} = \tau_k + \theta_{pk}$ est le retard cumulé du retard ($\tau_k$) à l'émission de l'utilisateur $k$ et du retard ($\theta_{pk}$) de propagation le long du trajet $p$ du canal $k$ et $c_{pk}$ est le facteur multiplicatif complexe associé à ce trajet. On supposera à nouveau que $0 \leq \tau_1 \leq ... \leq \tau_k \leq ... \leq \tau_K < T$ et qu'en outre la dispersion des trajets est inférieure à la période symbole $0 \leq \theta_{pk} < T$. Il en résulte que $0 \leq \tau_k < 2T$.

Les filtres adaptés $410_k$ effectuent alors un filtrage adapté à la signature de l'utilisateur $k$ et au canal de transmission $k$ par combinaison MRC (*Maximum Ratio Combining*) des signaux des différents trajets. Plus précisément, le filtre $310_k$ effectue l'opération suivante :

$$y_k(i) \overset{\Delta}{=} \sum_{p=1}^{P_k} c_{pk}^* \int_{-\infty}^{+\infty} s_k^*(t - iT - \tau_{pk}) n \, \mathrm{d}t \tag{35}$$

Du fait de la dispersion des retards, la durée à prendre en compte pour l'interférence entre utilisateurs est de $2T$ et le symbole d'un utilisateur pourra interférer avec deux symboles consécutifs non encore estimés d'un autre utilisateur. La détection conjointe porte alors sur tous les symboles interférents non encore estimés, les symboles interférents estimés étant, quant à eux, exploités pour l'élimination soustractive. La complexité du détecteur par sphères est plus élevée que dans le cas asynchrone mono-trajet puisque la dimension du réseau à prendre en compte est de $2K\text{-}1$ au lieu de $K$.

Enfin, il faut encore noter que l'estimation des contributions interférentes dans le cas asynchrone mono-trajet ou multi-trajet peut être réalisée soit à partir de symboles de constellation (décisions dures) soit à partir des symboles souples des différents utilisateurs.

Bien que certains modes de réalisation de l'invention aient été représentés sous forme de modules fonctionnels, il est clair que le dispositif selon l'invention peut être réalisé sous forme d'un processeur programmé pour exécuter les différentes fonctions représentées ou sous la forme d'une pluralité de processeurs dédiés aptes à mettre en oeuvre une ou plusieurs de ces fonctions.

**Revendications**

1.	Méthode de détection d'une pluralité de symboles ($\mathbf{d}_k(i)$) transmis par ou pour une pluralité $K$ d'utilisateurs, chaque symbole appartenant à une constellation de modulation et faisant l'objet d'un étalement spectral par une séquence d'étalement, ladite méthode comprenant une étape de filtrage adapté ($310_1,...,310_K$) pour fournir un vecteur complexe ($\mathbf{y}(i), \tilde{\mathbf{y}}(i)$) caractéristique dudit signal reçu, **caractérisée en ce que** ledit vecteur complexe est décomposé en un premier vecteur constitué des parties réelles ($\mathbf{y}^R(i), \tilde{\mathbf{y}}^R(i)$) et un second vecteur constitué des parties imaginaires ($\mathbf{y}^I(i), \tilde{\mathbf{y}}^I(i)$) et qu'au moins les plus proches voisins des premier et second vecteurs sont recherchés (330,331) au sein d'un réseau de points ($\Lambda, \Omega$) généré par lesdites constellations de modulation, les symboles transmis étant estimés à partir des composantes desdits plus proches voisins.

**2.** Méthode de détection selon la revendication 1, **caractérisée en ce que** les séquences d'étalement ($s_k(t)$) sont constitués de multiples réels ($s_k^0(t)$) d'un même coefficient complexe ($\sigma$).

**3.** Méthode de détection selon la revendication 1 ou 2, **caractérisée en ce que** la recherche est limitée à un premier ensemble de points du réseau appartenant à une première zone prédéterminée ($\Sigma_R$) autour du premier vecteur et à un second ensemble de points du réseau appartenant à une seconde zone prédéterminée ($\Sigma_I$) autour du second vecteur.

**4.** Méthode de détection selon la revendication 1 ou 2, **caractérisée en ce que** la recherche est limitée à un premier ensemble de points du réseau appartenant à une première zone prédéterminée ($\Sigma_R$) autour de l'origine et à un second ensemble de points du réseau appartenant à une seconde zone prédéterminée ($\Sigma_I$) autour de l'origine.

**5.** Méthode de détection selon la revendication 3 ou 4, **caractérisée en ce que** lesdites première et seconde zones prédéterminées sont des sphères.

**6.** Méthode de détection selon l'une des revendications précédentes, **caractérisée en ce que** la recherche du plus proche voisin du premier vecteur est effectuée sur une pluralité de composantes de ce dernier, la recherche étant limitée pour chacune desdites composantes à un intervalle défini par une borne inférieure et une borne supérieure, lesdites bornes étant choisies de manière à ce que ledit intervalle ne comprenne pas des points relatifs à des symboles ne pouvant appartenir à la constellation de modulation.

**7.** Méthode de détection selon l'une des revendications précédentes, **caractérisée en ce que** la recherche du plus proche voisin du second vecteur est effectuée sur une pluralité de composantes de ce dernier, la recherche étant limitée pour chacune desdites composantes à un intervalle défini par une borne inférieure et une borne supérieure, lesdites bornes étant choisies de manière à ce que ledit intervalle ne comprenne pas des points relatifs à des symboles ne pouvant appartenir à la constellation de modulation.

**8.** Méthode de détection selon l'une des revendications précédentes, **caractérisée en ce que**, préalablement à la recherche du plus proche voisin, le premier vecteur ($\mathbf{y}^R(i)$) est soumis à un traitement matriciel (320) visant à substantiellement décorréler les différentes composantes de bruit de ce dernier.

**9.** Méthode de détection selon l'une des revendications précédentes, **caractérisée en ce que**, préalablement à la recherche du plus proche voisin, le second vecteur ($\mathbf{y}^I(i)$) est soumis à un traitement matriciel (321) visant à substantiellement décorréler les différentes composantes de bruit de ce dernier.

**10.** Méthode de détection selon l'une des revendications précédentes, **caractérisée en ce que** ladite étape de recherche est étendue à celle d'un premier ensemble de points plus proches voisins dudit premier vecteur, dits premiers voisins, et à un second ensemble de points plus proches voisins dudit second vecteur, dits seconds voisins, et que les symboles transmis sont estimés de manière souple à partir des symboles générant lesdits premiers et second voisins et des distances séparant lesdits premiers voisins dudit premier vecteur d'une part et lesdits seconds voisins dudit second vecteur d'autre part.

**11.** Méthode de détection selon l'une des revendications précédentes, **caractérisée en ce que** l'on détermine à partir des symboles estimés les contributions de chaque utilisateur aux signaux obtenus par l'étape de filtrage adapté et que, pour un utilisateur $k$ donné, l'on élimine en sortie de l'étape de filtrage adapté les contributions des autres utilisateurs correspondant aux symboles déjà estimés.

**12.** Méthode de détection selon l'une des revendications 1 à 10, **caractérisée en ce que** l'on détermine (340) les contributions de chaque utilisateur au signal reçu à partir des symboles estimés et que, pour un utilisateur $k$ donné, l'on élimine en entrée de l'étape de filtrage adapté les contributions des autres utilisateurs correspondant aux symboles déjà estimés.

**13.** Méthode de détection selon l'une des revendications 1 à 10, **caractérisée en ce que**, les symboles desdits $K$ utilisateurs étant transmis de manière synchrone, ledit réseau de points est de dimension $K$.

**14.** Méthode de détection de selon la revendication 11 ou 12, **caractérisée en ce que**, les symboles desdits $K$ utilisateurs étant transmis de manière asynchrone et se propageant selon une pluralité de trajets, la dimension du réseau est égale au nombre de symboles des différents utilisateurs pouvant interférer et non encore estimés.

**15.** Dispositif de détection d'une pluralité de symboles ($\mathbf{d}_k(i)$) transmis par ou pour une pluralité $K$ d'utilisateurs, chaque symbole appartenant à une constellation de modulation et faisant l'objet d'un étalement spectral par une séquence d'étalement, le dispositif comprenant des moyens pour mettre en oeuvre la méthode revendiquée selon l'une des revendications précédentes.

**16.** Récepteur pour système de télécommunication mobile DS-CDMA comprenant un dispositif de détection selon la revendication 15.

**Claims**

**1.** Method of detecting a plurality of symbols ($d_k(i)$) transmitted by or for a plurality $K$ of users, each symbol belonging to a modulation constellation and being the subject of a spectral spreading by means of a spreading sequence, said method comprising a filtering step ($310_1,...,310_K$) adapted for supplying a complex vector ($y(i),y(i)$) characteristic of said received signal, **characterised in that** said complex vector is decomposed into a first vector made up of real parts ($y^R(i),y^R(i)$) and a second vector made up of imaginary parts ($y^I(i),y^I(i)$), and **in that** at least the closest neighbours of the first and second vectors are sought (330,331) within a lattice of points ($\Lambda,\Omega$) generated by said modulation constellations, the transmitted symbols being estimated from the components of said closest neighbours.

**2.** Detection method according to claim 1, **characterised in that** the spreading sequences ($s_k(t)$) are made up of real multiples ($s_k(t)$) of the same complex coefficient ($\sigma$).

**3.** Detection method according to claim 1 or 2, **characterised in that** the search is limited to a first set of points in the lattice belonging to a first predetermined zone ($\Sigma_R$) around the first vector and to a second set of points in the lattice belonging to a second predetermined zone ($\Sigma_I$) around the second vector.

**4.** Detection method according to claim 1 or 2, **characterised in that** the search is limited to a first set of points in the lattice belonging to a first predetermined zone ($\Sigma_R$) around the origin and to a second set of points in the lattice belonging to a second predetermined zone ($\Sigma_I$) around the origin.

**5.** Detection method according to claim 3 or 4, **characterised in that** said first and second predetermined zones are spheres.

**6.** Detection method according to one of the preceding claims, **characterised in that** the search for the closest neighbour of the first vector is carried out on a plurality of components of the latter, the search being limited for each of said components to an interval defined by a lower bound and an upper bound, said bounds being chosen such that said interval does not include points relating to symbols which cannot belong to the modulation constellation.

**7.** Detection method according to one of the preceding claims, **characterised in that** the search for the closest neighbour of the second vector is carried out on a plurality of components of the latter, the search being limited for each of said components to an interval defined by a lower bound and an upper bound, said bounds being chosen such that said interval does not include points relating to symbols which cannot belong to the modulation constellation.

**8.** Detection method according to one of the preceding claims, **characterised in that,** prior to the search for the closest neighbour, the first vector ($y^R(i)$) is subjected to a matrix processing (320) aimed at substantially decorrelating the different noise components of the latter.

**9.** Detection method according to one of the preceding claims, **characterised in that,** prior to the search for the closest neighbour, the second vector ($y^I(i)$) is subjected to a matrix processing (321) aimed at substantially decorrelating the different noise components of the latter.

**10.** Detection method according to one of the preceding claims, **characterised in that** said search step is extended to the search for a first set of points which are the closest neighbours of said first vector, termed first neighbours, and to a second set of points which are the closest neighbours of said second vector, termed second neighbours, and **in that** the transmitted symbols are estimated in a flexible manner from the symbols generating said first and second neighbours and from the distances separating said first neighbours from said first vector on the one hand and said second neighbours from said second vector on the other hand.

11. Detection method according to one of the preceding claims, **characterised in that** the contributions of each user to the signals obtained by the adapted filtering step are determined from the estimated symbols, and **in that**, for a given user *k*, the contributions of the other users which correspond to the symbols already estimated are eliminated at the output of the adapted filtering step.

12. Detection method according to one of claims 1 to 10, **characterised in that** the contributions of each user to the received signal are determined (340) from the estimated symbols, and **in that**, for a given user *k*, the contributions of the other users which correspond to the symbols already estimated are eliminated at the input of the adapted filtering step.

13. Detection method according to one of claims 1 to 10, **characterised in that** the symbols of said *K* users being transmitted synchronously, said lattice of points has the dimension *K*.

14. Detection method according to claim 11 or 12, **characterised in that** the symbols of said *K* users being transmitted asynchronously and propagating along a plurality of paths, the dimension of the lattice is equal to the number of symbols of the different users which may interfere and are not yet estimated.

15. Device for detecting a plurality of symbols ($d_K(i)$) transmitted by or for a plurality *K* of users, each symbol belonging to a modulation constellation and being the subject of a spectral spreading by means of a spreading sequence, the device comprising means for implementing the method claimed according to one of the preceding claims.

16. Receiver for a DS-CDMA mobile telecommunication system comprising a detection device according to claim 15.

**Patentansprüche**

1. Methode zum Erfassen einer Vielzahl von Symbolen ($d_k(i)$), die von einer oder für eine Vielzahl von *K* Benutzern übertragen werden, wobei jedes Symbol zu einer Modulationskonstellation gehört und Gegenstand einer spektralen Streuung durch eine Streuungssequenz ist, wobei die Methode einen entsprechenden Filterschritt ($310_1$,..., $310_K$) umfasst, um einen komplexen Vektor ($y(i), \tilde{y}(i)$) zu liefern, der für das empfangene Signal charakteristisch ist, **dadurch gekennzeichnet, dass** der komplexe Vektor in einen ersten Vektor bestehend aus den Realteilen ($y^R(i), \tilde{y}^R(i)$) und einen zweiten Vektor bestehend aus den Imaginärteilen ($y^I(i), \tilde{y}^I(i)$) aufgeteilt ist, und dass mindestens die nächsten Nachbarn des ersten und des zweiten Vektors innerhalb eines Punktenetzes ($\Delta, \Omega$) gesucht werden (330, 331), das von den Modulationskonstellationen erzeugt wird, wobei die übertragenen Symbole ausgehend von den Komponenten der nächsten Nachbarn geschätzt werden.

2. Methode zum Erfassen nach Anspruch 1, **dadurch gekennzeichnet, dass** die Streuungssequenzen ($s_k(t)$) aus multiplen Realen ($s^0_k(t)$) eines gleichen komplexen Koeffizienten ($\sigma$) bestehen.

3. Methode zum Erfassen nach Anspruch 1 oder 2, **dadurch gekennzeichnet, dass** die Suche auf eine erste Einheit von Punkten des Netzes, die zu einer ersten vorbestimmten Zone ($\Sigma_R$) um den ersten Vektor gehören, und auf eine zweite Einheit von Punkten des Netzes, die zu einer zweiten vorbestimmten Zone ($\Sigma_I$) um den zweiten Vektor gehören, beschränkt ist.

4. Methode zum Erfassen nach Anspruch 1 oder 2, **dadurch gekennzeichnet, dass** die Suche auf eine erste Einheit von Punkten des Netzes, die zu einer ersten vorbestimmten Zone ($\Sigma_R$) um den Nullpunkt gehören, und auf eine zweite Einheit von Punkten des Netzes, die zu einer zweiten vorbestimmten Zone ($\Sigma_I$) um den Nullpunkt gehören, beschränkt ist.

5. Methode zum Erfassen nach Anspruch 3 oder 4, **dadurch gekennzeichnet, dass** die vorbestimmte erste und zweite Zone Kugeln sind.

6. Methode zum Erfassen nach einem der vorhergehenden Ansprüche, **dadurch gekennzeichnet, dass** die Suche des nächsten Nachbarn des ersten Vektors an einer Vielzahl von Komponenten dieses letzteren durchgeführt wird, wobei die Suche für jede der Komponenten auf ein Intervall beschränkt ist, das von einer unteren Grenze und einer oberen Grenze definiert wird, wobei die Grenzen so ausgewählt werden, dass das Intervall keine Punkte enthält, die sich auf Symbole beziehen, die nicht zu einer Modulationskonstellation gehören können.

7. Methode zum Erfassen nach einem der vorhergehenden Ansprüche, **dadurch gekennzeichnet, dass** die Suche des nächsten Nachbarn des zweiten Vektors an einer Vielzahl von Komponenten dieses letzteren durchgeführt wird, wobei die Suche für jede der Komponenten auf ein Intervall beschränkt wird, das von einer unteren Grenze und einer oberen Grenze definiert wird, wobei die Grenzen so ausgewählt werden, dass das Intervall keine Punkte enthält, die sich auf Symbole beziehen, die nicht zu einer Modulationskonstellation gehören können.

8. Methode zum Erfassen nach einem der vorhergehenden Ansprüche, **dadurch gekennzeichnet, dass** vor dem Suchen des nächsten Nachbarn der erste Vektor ($y^R(i)$) einer Matrixverarbeitung (320) unterzogen wird, die im Wesentlichen darauf abzielt, die verschiedenen Komponenten des Rauschens diese letzteren zu entkoppeln.

9. Methode zum Erfassen nach einem der vorhergehenden Ansprüche, **dadurch gekennzeichnet, dass** vor dem Suchen des nächsten Nachbarn der zweite Vektor ($y^I(i)$) einer Matrixverarbeitung (321) unterzogen wird, die im Wesentlichen darauf abzielt, die verschiedenen Komponenten des Rausches dieses letzteren zu entkoppeln.

10. Methode zum Erfassen nach einem der vorhergehenden Ansprüche, **dadurch gekennzeichnet, dass** der Suchschritt auf den einer ersten Einheit von Punkten, die nächste Nachbarn des ersten Vektors sind, die erste Nachbarn genannt werden, und einer zweiten Einheit von Punkten nächster Nachbarn des zweiten Vektors, die zweite Nachbarn genannt werden, erweitert wird, und dass die übertragenen Symbole ausgehend von den Symbolen, die die ersten und zweiten Nachbarn bilden, und von den Entfernungen, die die ersten Nachbarn des ersten Vektors einerseits und die zweiten Nachbarn des zweiten Vektors andererseits trennen, anpassungsfähig geschätzt werden.

11. Methode zum Erfassen nach einem der vorhergehenden Ansprüche, **dadurch gekennzeichnet, dass** man ausgehend von den geschätzten Symbolen die Beiträge jedes Benutzers zu den durch den entsprechenden Filterschritt erzielten Signalen bestimmt, und dass man für einen gegebenen Benutzer $k$ beim Verlassen des entsprechenden Filterschritts die Beiträge der anderen Benutzer eliminiert, die den bereits geschätzten Symbolen entsprechen.

12. Methode zum Erfassen nach einem der Ansprüche 1 bis 10, **dadurch gekennzeichnet, dass** man ausgehend von den geschätzten Symbolen die Beiträge jedes Benutzers zu dem empfangenen Signal bestimmt (340), und dass man für einen gegebenen Benutzer $k$ beim Eintreten in den entsprechenden Filterschritt die Beiträge der anderen Benutzer eliminiert, die den bereits geschätzten Symbolen entsprechen.

13. Methode zum Erfassen nach einem der Ansprüche 1 bis 10, **dadurch gekennzeichnet, dass** die Symbole der $K$ Benutzer synchron übertragen werden, wobei das Punktenetz die Größe $K$ hat.

14. Methode zum Erfassen nach einem der Ansprüche 11 oder 12, **dadurch gekennzeichnet, dass** die Symbole der $K$ Benutzer asynchron übertragen werden und sich gemäß einer Vielzahl von Bahnen ausbreiten, wobei die Größe des Netzes gleich der Anzahl von Symbolen der verschiedenen Benutzer ist, die interferieren können und noch nicht geschätzt sind.

15. Vorrichtung zum Erfassen einer Vielzahl von Symbolen ($d_k(i)$), die von einer oder für eine Vielzahl von $K$ Benutzern übertragen werden, wobei jedes Symbol zu einer Modulationskonstellation gehört und Gegenstand einer spektralen Streuung durch eine Streuungssequenz ist, wobei die Vorrichtung Mittel umfasst, um die gemäß einem der vorhergehenden Ansprüche beanspruchte Methode durchzuführen.

16. Empfänger für ein Mobiltelekommunikationssystem DS-CDMA, das eine Vorrichtung zum Erfassen nach Anspruch 15 umfasst.

FIG.1

FIG.2

FIG.3

FIG.4